# EUROPEAN PATENT APPLICATION

(11) **EP 2 568 394 A1**
(43) Date of publication of application: **13.03.2013**
(21) Application number: 10851053.8
(22) Date of filing: 07.05.2010
(51) Int. Cl.: G06F 15/177, G06F 9/50

(54) **HARDWARE CONTROL METHOD OF INFORMATION PROCESSING SYSTEM AND INFORMATION PROCESSING SYSTEM**

(71) Applicant: Fujitsu Limited, Kawasaki-shi, Kanagawa 211-8588 (JP)
(72) Inventor: YAMAGAMI Yoshihito, Kawasaki-shi, Kanagawa 211-8588 (JP)
(74) Representative: HOFFMANN EITLE
(86) International application number: PCT/JP2010/057819
(87) International publication number: WO 2011/138833

(57) **Abstract**

An information processing system has a plurality of processing devices and a plurality of system control devices which control hardware in the plurality of processing devices. Each of the system control devices shares the hardware control in the plurality of processing devices. One of system control devices determines shared processing amount of which each of system control devices charge from processing amount of hardware control in the plurality of processing devices and each of the system control devices executes the hardware control of the shared amount in the plurality of processing devices.

## Description

### TECHNICAL FIELD

The embodiments discussed herein are related to information processing system and a method of controlling hardware of the information processing system.

### BACKGROUND ART

Information processing system has a plurality of processing devices (hardware) and a system control device which controls each of the plurality of processing devices. The system control device executes system control, such as power supply control and configuration control in whole system. In the information processing system with a single system control device, when the system control device failed, it is difficult that whole system operates. For this reason, the information processing system employs redundant configuration of which more than one system control devices are provided. The redundant configuration executes the system control with which one system control device is an operating state and another system control device is a standby state.

### [Patent document]

Japanese Laid-open Patent Publication No. 54-074655

### SUMMARY OF THE INVENTION

### PROBLEM TO BE SOLVED BY THE INVENTION

Because one of the system control devices controls a hardware of each of the plurality of processing devices by a single interface, it takes a long time to control the hardware according to increasing the processing device (hardware) which are control targets of the system control device in the information processing system. Also, when LSI (Large Scale Integrated) circuits which are control targets of the system control device increase in the processing device (system board), it takes a long time to control the hardware because a single interface is used for control.

In particular, in a large-scale information processing system such as a HPC (High Performance Computing) computer, the system control device controls a huge number of the processing devices and the LSI devices (hardware), so it clear takes a long time to control the hardware such as hardware power-on /initialization / termination.

### MEANS FOR SOLVING THE PROBLEM

Accordingly, it is an object in one aspect of the invention to provide information processing system and a method of controlling hardware in the information processing system that redundant configured system control devices execute the hardware control with a high speed.

One feature of the information processing systems includes a plurality of processing devices that each device has a hardware which performs information processing, and a plurality of system control devices that execute hardware control of the hardware in the plurality of processing devices according to a hardware control instruction, and wherein one of the plurality of system control devices determines share amount of the hardware control that each of the plurality of system control devices share according to processing amount of the hardware control of the plurality of processing devices and each of the plurality of system control devices executes the hardware control of determined the share amount in the plurality of processing devices.

Further, one feature of a method of controlling hardware in information processing system having a plurality of processing devices that each device has a hardware which performs information processing and a plurality of system control devices, the method includes calculating processing amount to execute hardware control of the plurality of processing devices by one of the plurality of system control devices according to a hardware control instruction, determining share amount of the hardware control that each of the plurality of system control devices share, and executing the hardware control of determined the share amount by each of the plurality of system control devices.

### EFFECT OF THE INVENTION

It is possible to execute the hardware control at high speed, therefore it is effective to shorten the time, because a plurality of system control devices in a redundant construction execute the controlling of hardware of a plurality of processing devices And because of determining the shared processing amount that each of the system control devices charge from processing amount of the plurality of processing devices and executing the hardware control of the shared processing amount by each of the system control devices, it is possible to control the hardware with a higher speed even though a large processing amount of the control of the hardware.

### BRIEF DESCRIPTION OF DRAWINGS

FIG. 1 is a configuration diagram of the information processing system according to an embodiment.
FIG.2 is a detailed diagram of HPC (High Performance Computing) system applied the information processing system in FIG.1.
FIG. 3 is a diagram of connection relationship between a service processor and each LSI circuit in a system board in FIG.2.
FIG.4 is a diagram of power control of a system board and a service processor in FIG.2.
FIG.5 is a diagram of hardware sequence program and control program in FIG. 1 and FIG.2.
FIG. 6 is a diagram of hardware control sequence table in FIG.5.
FIG. 7 is a process flow diagram of hardware control by program configuration in FIG. 5.
FIG. 8 is a time chart of an operation in FIG. 7.
FIG. 9 is a process flow diagram of a service processor which executes operations in FIG. 7.
FIG. 10 is a diagram of explanation of onboard LSI count table in FIG. 9.
FIG. 11 is a diagram of explanation of processing amount count table in FIG.9.
FIG. 12 is a diagram of explanation of hardware control sharing tables in FIG.9.
FIG. 13 is a time chart of hardware control by program configuration in FIG. 5 according to a second embodiment.
FIG. 14 is a diagram of partitions in FIG. 13.
FIG. 15 is a diagram of explanation of processing amount count table in FIG.13 and FIG.14.
FIG. 16 is a diagram of explanation of hardware control sharing table in FIG. 13 and FIG. 14.
FIG. 17 is a time chart of hardware control by program configuration in FIG. 5 according to a third embodiment.
FIG. 18 is a flow diagram of sharing determination process of service processor in FIG.17.
FIG. 19 is a diagram of explanation of sharing determination process in FIG. 17 and FIG. 18.
FIG. 20 is a diagram of LSI number count table according to a fourth embodiment.
FIG. 21 is a diagram of explanation of hardware control sharing table according to the fourth embodiment.
FIG. 22 is a diagram of explanation of partition configuration example according to the fourth embodiment.
FIG. 23 is a diagram of explanation of hardware control sharing table 104 C table of partition 0 in FIG. 22.

### EMBODIMENTS TO REALIZE THE INVENTION

Below, embodiments will be described in order of information processing system, hardware control sequence, the hardware control method according to a first embodiment, the hardware control method according to a second embodiment, the hardware control method according to a third embodiment, the hardware control method according to a fourth embodiment, and other embodiments, but the information processing system and the hardware control are not limited to these embodiments.

### (Information processing system)

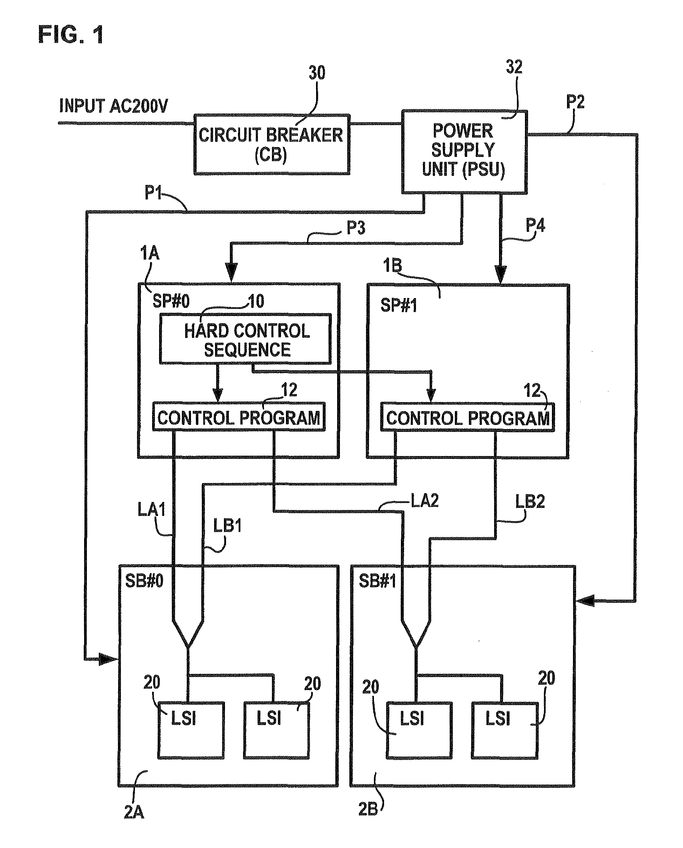

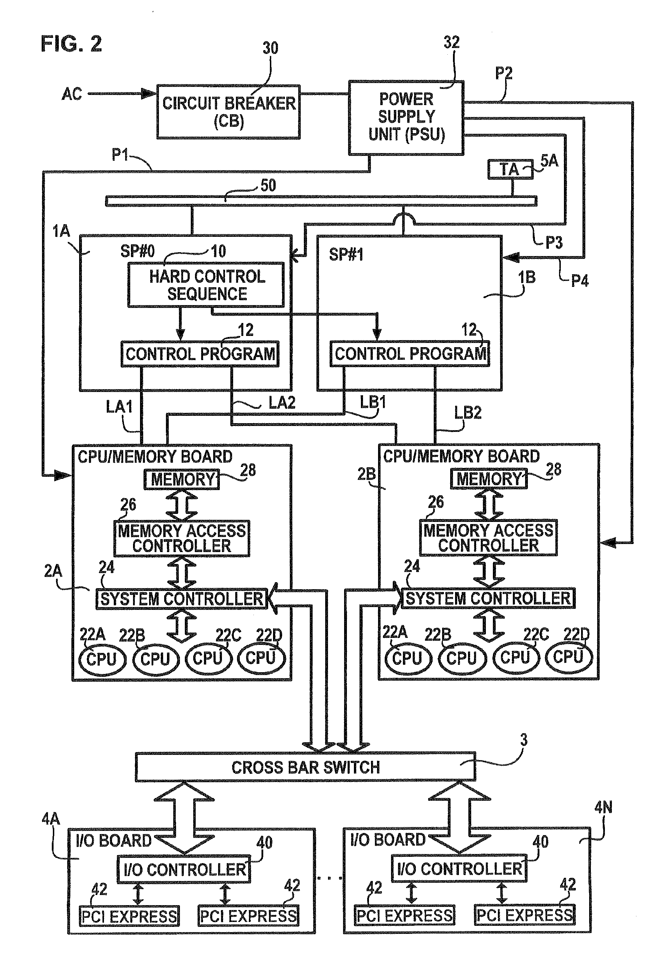

FIG. 1 is a diagram of the information processing system according to embodiments. FIG. 2 illustrates a HPC (High Performance Computing) system applied the information processing system in FIG. 1. Below, the information processing system will be described by the HPC (High Performance Computing) system, but not limited to the system.

As illustrated in FIG.1, a plurality of LSI (Large Scale Integrated) elements 20 are mounted on each of a plurality of system boards 2A and 2B as a processing device. Each LSI element 20 is a circuit element to perform information processing. In FIG.1, two system boards 2A and 2B are illustrated, but three or more system boards can be targeted.

A pair of system control devices (service processors) 1A and 1B execute monitoring and various settings of the system boards 2A and 2B. A first system control device 1A connects to the system board 2A by a first signal line LA1, and connects to the system board 2B by a second signal line LA2. A second system control device 1B connects to the system board 2A by a third signal line LB1, and connects to the system board 2B by a fourth signal line LB2.

An AC (Alternating Current) power (AC 200V) are input to a power supply unit (PSU) 32 via a circuit breaker 30. The power supply unit 32 converts the AC power (for example, 200V) to DC (Direct Current) power. The power supply unit 32 always supplies constant power (for example, DC 8V) to the service processors 1A and 1B through power lines P3 and P4. And when the power supply unit 32 receives a power-on instruction from the service processors 1A and 1B, the power supply unit 32 supplies the power (for example, DC 48V) to the system boards 2A and 2B through power lines P1 and P2.

Each service processor 1A and 1B executes hardware control sequence program 10 and control program 12. The hardware control sequence program 10 executes a hardware control sequence according to a hardware control instruction from an operator. The hardware control sequence controls each the LSI element 20 which is the hardware. For example, the hardware control sequence includes a power on sequence, an initialization process sequence, and a termination sequence as described in later.

The hardware control sequence program 10 converts executing sequence into a plurality of fine hardware control process, and instructs it to the control program 12 of the service processors 1A and 1B. The control program 12 executes the process instructed by the hardware control sequence program 10. The control program 12 outputs an instruction of I2C (Inter-Integrated Circuit) and JTAG (Joint Test Action Group) communication standards, for example, to the hardware (system board) 2A and 2B. The I2C communication standard 2B mainly performs to control power supply systems of the system boards 2A and 2B. The JTAG communication standards performs to process the LSI devices 20.

In this embodiment, instead of only active (during operation) service processor (system control device) executes the hardware control, redundant plurality of service processors 1A and 1B control the hardware control sequence in order. During the control, the service processors 1A and 1B decompose the hardware control sequence into fine control targets / control contents. And the plurality of service processors 1A and 1B share the decomposed control targets / control contents according to process amount.

An overall control flow will be described as follows. Note that, in following description, the service processor 1A is set as an operation while the service processor 1B is set as a standby.
(1) A type of the hardware control sequence to execute is determined from a user operation. That is, the user specifies the type of the hardware control sequence to the service processor 1A. In this example, a unit of control is system such as "system power on" or "system reset".
(2) The hardware control sequence program of the service processor 1A decomposes specified hardware sequence program 10 into detailed instructions on the hardware unit.
(3) The service processor 1A determines which service processor of the redundant plurality of service processors 1A and 1B controls the detailed instruction. And the hardware control targets (system boards 2A and 2B) follow the control instructions from both of the service processor 1A and 1B.
(4) The control program 12 of each service processor 1A and 1B dispatch the shared control instruction to the system boards 2A and 2B.

In this way, because both of active service processor 1A and standby service processor 1B share execute the instructed hardware control sequence, it is possible to execute the hardware control of the plurality of system board 2A and 2B with a high speed. In FIG.1, two system boards are control target for simplification, the high speed effect is large especially in large information processing system that ten or several tens system boards are control target.

The HPC system will be described according to FIG. 2. In FIG. 2, same elements as depicted in FIG. 1 are represented in same symbols. As illustrated in FIG. 2, the system boards 2A and 2B include CPU / memory boards. The system boards 2A and 2B includes a plurality of processing devices (CPU:Central Processing Unit) 22A, 22B, 22C, 22D, a system controller 24, a memory access controller 26 and a host memory 28. In this embodiment, four processing devices (hereinafter referred to as CPU) are provided to the system boards 2A and 2B. The number of CPU that the system boards 2A and 2B are mounted may be a single or other plural.

Each of the CPU 22A ∼ 22D connect to the system controller 24. The system controller 24 connects to the memory access controller 26 which is connected to the host memory 28. The system controller 24 connects a plurality of I/O (Input/Output) boards 4A ∼ 4N via a crossbar switch 3.

The I/O boards have a I/O controller and a plurality of PCI (Peripheral Component Interconnect) Express slots 42. The PCI Express slots are connected to an external memory (a large capacity memory and / or a storage device) or a network interface card (NIC). The system controller 24 transfer controls between the CPU 22A ∼ 22D and the memory access controller 26, and between the crossbar switch 3 and the CPU 22A ∼ 22D, the memory access controller 26. The crossbar switch 3 directly connects between the system boards 2A and 2B and between the system Boards 2A, 2B and the I/O ports 4A ∼ 4N, with 1 by 1.

By the crossbar switch 3, it is possible to transfer data with a high speed between the system boards 2A and 2B and between the system Boards 2A, 2B and the I/O ports 4A ∼ 4N. In the example of FIG.2, the information processing system is installed two system boards, but it is preferable that the information processing system is mounted several ten system boards.

And the service processors 1A and 1B are interconnected by a communication route 50. It is preferable that the communication route 50 may use LAN (Local Area Network). A terminal device 5A connects to the communication route 50, instructs hardware control sequence to the service processor 1A and 1B according to the user operation and obtains status. Preferably the terminal device 5A consists to a personal computer.

In FIG.2, the LSI elements 20 in FIG.1 correspond to each of the CPU 22A, 22B, 22 C, 22 D, the system controller 24, the memory access controller 26 and the host memory 28.

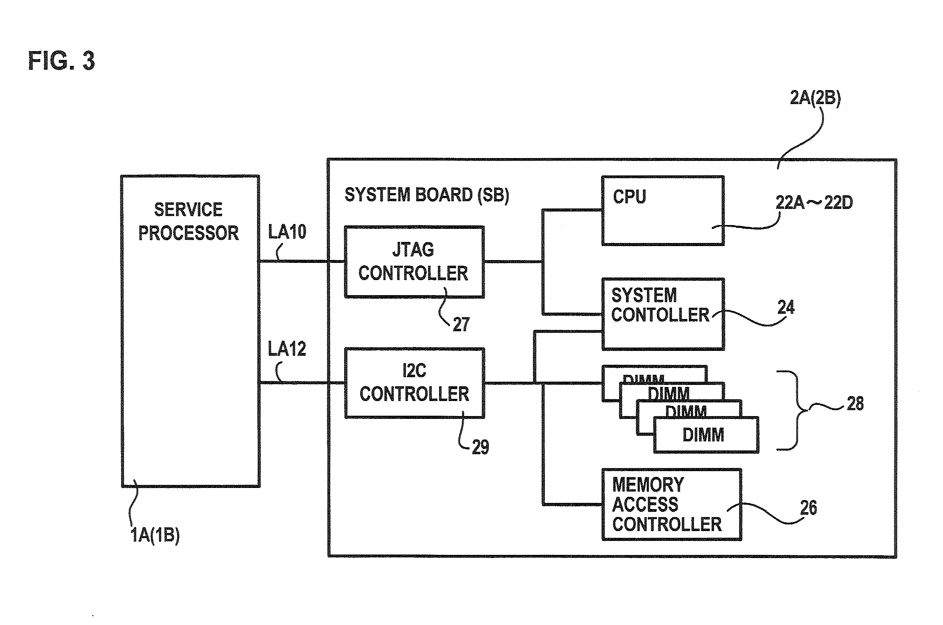

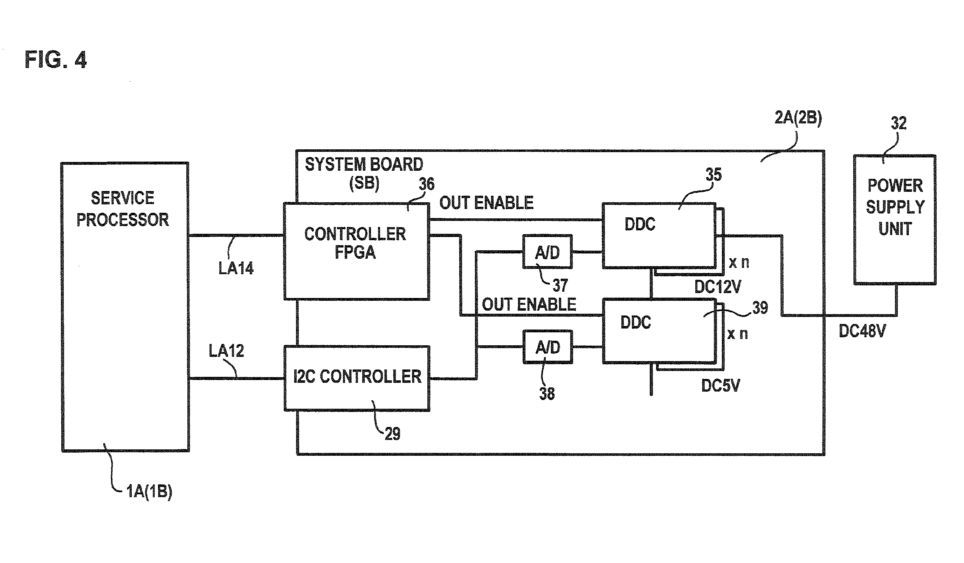

FIG. 3 illustrates a diagram of the connection relationship between each LSI elements in the system board 2A and the service processor 1A. FIG. 4 illustrates a diagram of the service processor 1A and power control of the system board 2A in FIG. 2. In FIG. 3 and FIG.4, same elements as depicted in FIG. 1 and FIG. 2 are represented by same symbols.

As described in FIG. 1 and FIG.2, the service processor 1A connects to the system board 2A via the signal lines LA1. As illustrated in FIG.3, the signal lines LA1 has a signal line LA 10 of JTAG standard (hereinafter referred to as JTAG signal line) and a signal line LA 12 of I2C standard (hereinafter referred to as I2C signal line).

The service processor 1A connects to JTAG controller 27 in the system board 2A via the JTAG signal line LA10. And the service processor 1A connects to I2C controller 29 in the system board 2A through the I2C signal line LA12. The JTAG controller 27 connects to the CPU 22A ∼ CPU 22D and connects to the system controller 24. The I2c controller 29 connects to the system controller 24, the memory 28 and the memory access controller 26. The memory has DIMM (Dual Inline Memory Module).

As illustrated in FIG. 1 and FIG. 2, connection configuration of the signal lines LB1 which connects the service processor 1B and the system board 2A is same as the connection configuration of the signal line LA1 which connects the service processor 1A and the system board 2A. And the connection configurations of the signal lines LA2 and LB2 which connect the service processor 1A and 1B and the system board 2B are same as the connection configuration of the signal lines LA1 and LB1. Therefore, FIG. 3 only depicts the connection configuration of the signal line LA1 which connects the services processor 1A and the system board 2A, and the description of the connection configuration of other signal lines LA2, LB1 and LB2 are omitted.

The service processor 1A executes a hardware setting and initialization of the CPU 22A ∼22D, the system controller 24 via the JTAG controller 27. And the service processor 1A controls a power in the system board 2A through the I2C controller 29.

As illustrated in FIG. 4, in power supply connection configuration, the system board 2A has a first digital-to-digital converter (DDC: DC-DC Converter) 35 and a second digital-to-digital converter (DDC: DC-DC Converter) 39. In the example, the first digital-to-digital converter (hereinafter referred to as the DDC) 35 converts DC 48V form the power supply unit 32 to DC 12V. And the second digital to digital converter (hereinafter referred to as DDC) 39 converts DC 12V from the first DDC 35 to DC 5V and supplies the DC 5V to each LSI elements 20. Not illustrated in FIG. 4, the system board 2A has a third DDC and a fourth DDC. The third DDC converts DC 5V outputted from the DDC 39 to DC 3.3 V, and the fourth DDC converts DC 3. 3V outputted from the third DDC to DC 1.8 V.

A board controller (described as Controller FPGA in FIG. 4) 36 receives commands and data form the service processor 1 through a control signal line LA14, obtains status of the system board 2A, and loads a program into the system board 2A. The board controller 36 controls on and off of the first and second DDC 35, 39 according to a power control command from the service processor 1A. FIG. 4 represents that the power controller 36 sends power output permission signal (Out Enable) which instructs power-on to the DDC 35, 39.

Each of a pair of A/D converters (Analog/Digital Converter) 37, 38 converts output voltages of the first DDC 35 and the second DDC 38 to digital values (voltage values). The I2c controller 29 reads the voltage value of each DDC from the A/D converters 37 and 38. The service processor 1A reads the voltage values of the I2C controller 29 through the signal line LA12 and checks the voltage values.

### (Hardware control sequence)

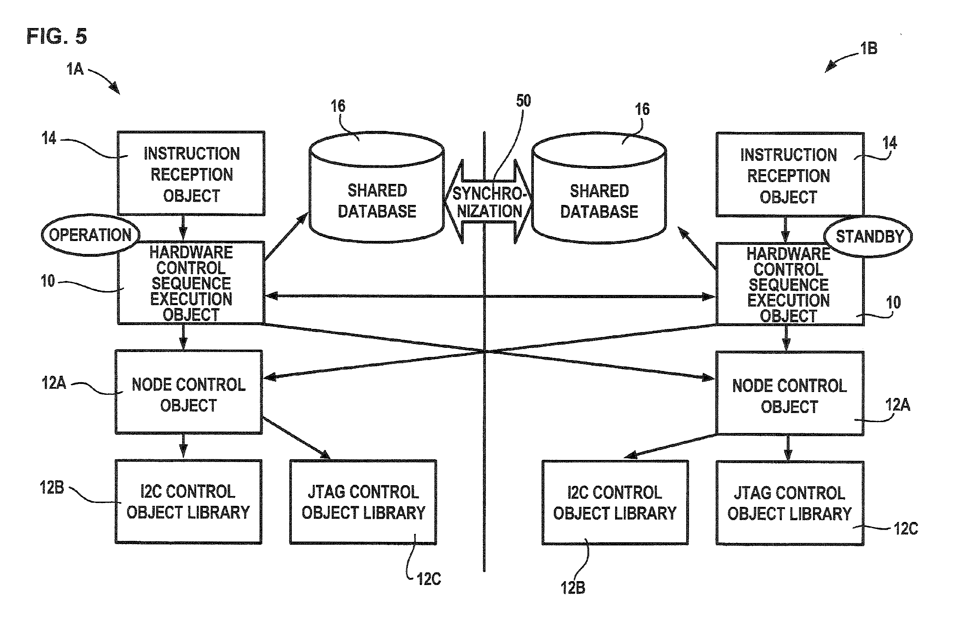

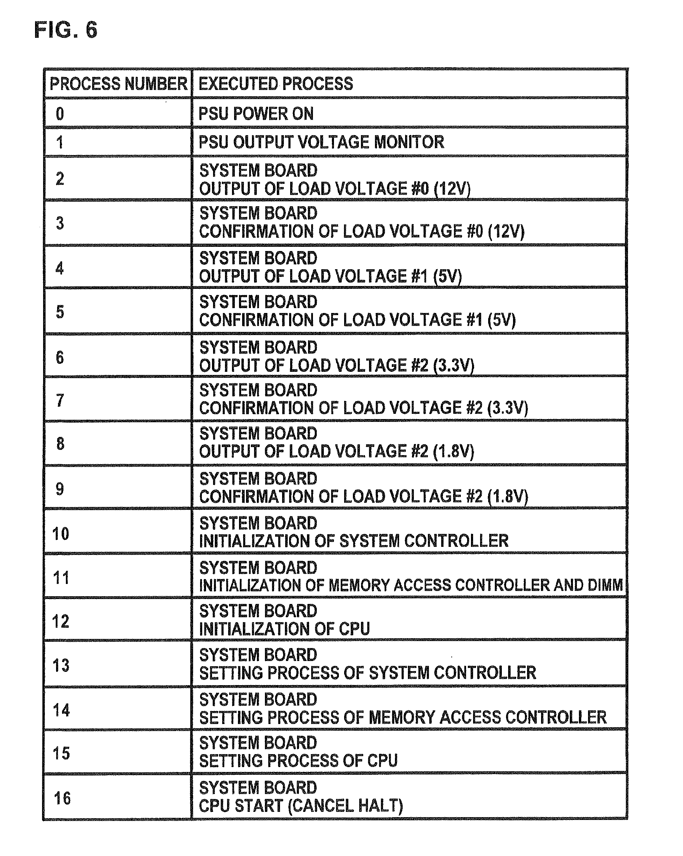

FIG. 5 illustrates a detailed diagram of the hardware control sequence program and the control program in FIG. 1 and FIG.2. FIG. 6 is a diagram of the hardware control sequence table in FIG. 5. FIG. 5 depicts configurations of program for performing the hardware control sequence of the service processor 1A, 1B.

In FIG. 5, an instruction reception object 14 receives start/reset/ stop instructions and a degradation instruction of hardware abnormal from the terminal device 5 by an operator. The hardware control sequence program (hardware control sequence execution object) 10 converts the instructions of start/reset/ stop, etc. into specific hardware control sequence and transfers it to the node control object 12A. Moreover, the hardware control sequence execution object (hereinafter referred to as execution object) 10 determines the node control object which the hardware control sequence should be sent. Only the execution object 10 has an operation/standby status. The execution object 10 in the standby status transfers the instructions received from the instruction reception object to the execution object 10 in the operation status. In FIG. 5, the service processor 1A is in the operation status and the service processor 1B is in the standby status. Therefore, the execution object in the service processor 1A is the operation status and the execution object in the service processor 1B is the standby status.

Shared database files 16 are database files for sharing information between the service processors 1A and 1B. The service processors 1A and 1B write information to both shared database files 16, thereby making the shared databases in each service processors to synchronize.

The node control object 12A executes the hardware control in accordance with the hardware control sequences received from the execution object 10. The I2C control object library (hereinafter referred to as I2C control object) 12B receives the instructions from the node control object 12A, and executes processing of power system as described in FIG. 4. The JTAG control object library (hereinafter referred to as JTAG control object) 12C receives the instructions from the node control object 12A, and executes processing of the LSI element group as described in FIG. 3.

Next, the hardware control sequence will be explained in an example of power supply control sequence and reset control sequence by using FIG. 6. In FIG. 6, the execution processes are described with correspondence of process number. And in the hardware control sequence table of FIG.6, the power supply control sequence includes the process numbers 0-9 and the reset control sequences include the process numbers 10 through 16. Each control sequences perform a control in order of the process number.

In the power supply control sequence, the service processor 1A executes the power unit 32 power-on in the process number 0. Thereby, the power is supplied to the system boards 2A and 2B. In the following process number 1, the service processor 1A executes to check the output voltage of the power supply unit 32. After checking, in the process number 2, the service processor 1A executes to output load voltage (12-volt) to the system boards 2A and 2B. As described in FIG.4, the service processor 1A instructs output enable of the DDC 35 to the board controller 36 through the control signal line LA14. The board controller 36 writes the output enable into the DDC 35. The DDC 35 receives the output enable from the board controller 36 and starts the operation to convert the DC 48V from the power supply unit 32 to DC 12V.

In the process number 3, the service processor 1A executes to check load output of the DDC 35. As described in FIG.4, the service processor 1A instructs reading of the voltage value of the DDC 35 to the I2C controller 29 through the control signal line LA12. The I2C controller 29 reads the output voltage value of the DDC35 via A/D converter 37, and sends the output voltage value to the service processor 1A. The service processor 1A checks whether or not the output voltage value of the DDC35 sent from the I2C controller 29 is predetermined value.

After checking, in the process number 4, the output of the load voltage of the system boards 2A and 2B are executed. As described in FIG.4, the service processor 1A instructs an output enable of the DDC 35 to the board controller 36 through the control signal line LA14. The board controller 36 writes the out enable to the DDC 37. The DDC 37 receives the output enable from the board controller 36 and starts the operation of converting DC12 V from the DDC 35 to DC 5V.

In the process number 5, the service processor 1A executes to check load output of the DDC 37. As described in FIG. 4, the service processor 1A instructs reading of the voltage value of DDC 37 to the I2C controller 29 through the control signal line LA12. The I2c controller 29 reads the output voltage value of the DDC 37 via A/D converter 38 and sends the output voltage value to the service processor 1A. The service processor 1A checks whether or not the output voltage value of the DDC 37 sent from the I2C controller 29 is a predetermined value.

Similarly, in the process number 6, the service processor 1A executes to output the load voltage (3.3 V) in the system boards 2A and 2B. In the process number 7, the service processor 1A executes to check the load output of the third DDC. And in the process number 8, the service processor 1A performs to output the load voltage (1.8 V) in the system boards 2A and 2B. In the process number 9, the service processor 1A executes to check the load output of the fourth DDC.

Thus, the service processor 1A executes the power supply control sequence. In the embodiment, power saving is expected because the power is not supplied at all times to the system boards 2A and 2B from the power unit 32. And the power-on and checking of the output voltage value are performed in order of the first DDC 35, the second DDC37, the third DDC and the fourth DDC form the power unit 32. Therefore, it is possible to smooth perform the power control.

Next, the reset control sequences will be explained. In the process number 10, the service processor 1A initializes the system controller 24. As described in FIG. 3, the service processor 1A instructs an initialization of the system controller 24 to the JTAG controller 27 via the JTAG signal line LA10. The JTAG controller 27 clears registers, etc. in the system controller 24.

In the process number 11, the service processor 1A initializes the memory access controller 26 and the memory 28. As described in FIG.3, the service processor 1A instructs an initialization of the memory access controller 26 and memory 28 to the I2C controller 29 through the I2C signal line LA12. The I2c controller 29 clears registers, etc. in the memory access controller 26 and the memory 28.

In the process number 12, the service processor 1A initializes the CPU 22A ∼ 22D. As described in FIG.3, the service processor 1A instructs an initialization of the CPU 22A - 22D to the JTAG controller 27 via the JTAG signal line LA10. The JTAG controller 27 clears registers, etc. in the CPU 22A ∼ 22D. In this way, each LSI elements 20 are initialized.

Next, in the process number 13, the service processor 1A executes setting process of the system controller 24. As described in FIG.3, the service processor 1A instructs setting of the system controller 24 to the JTAG controller 27 via the JTAG signal line LA10. The JTAG controller 27 sets connection relationship, etc. to the system controller 24.

In the process number 14, the service processor 1A executes setting of the memory access controller 26. As described in FIG.3, the service processor 1A instructs setting of the memory access controller 26 to the I2C controller 29 via the I2C signal line LA12. The I2c controller 29 sets connection relationship, etc. to the memory access controller 26.

In the process number 15, the service processor 1A executes setting of the CPU 22A ∼ 22D. As described in FIG.3, the service processor 1A instructs setting of the CPU 22A ∼ 22D to the JTAG controller 27 via the JTAG signal line LA10. The JTAG controller 27 sets connection relationship, etc. to the CPU 22A ∼ 22D.

In the process number 16, the service processor 1A releases halts of the CPU 22A ∼ 22D and makes the CPU 22A ∼ 22D to a start state. As described in FIG.3, the service processor 1A instructs release of halt of the CPU 22A ∼ 22D via the JTAG signal line LA10. The JTAG controller 27 releases the halt of the CPU 22A ∼ 22D.

In this way, each LSI elements are set and CPU 22A ∼ 22D makes to start the operation.

### (First embodiment of the hardware control)

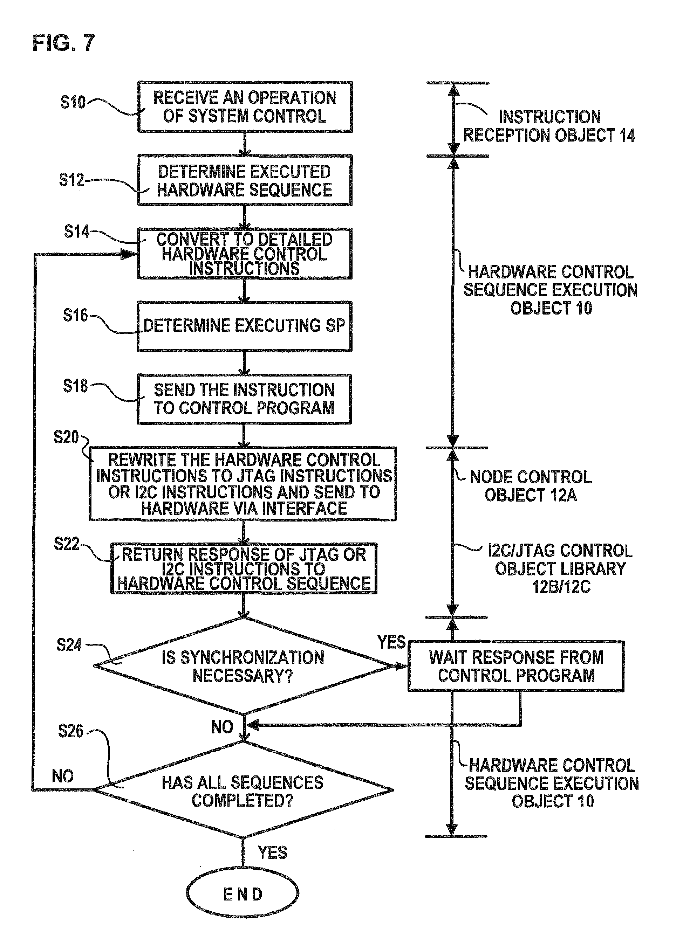

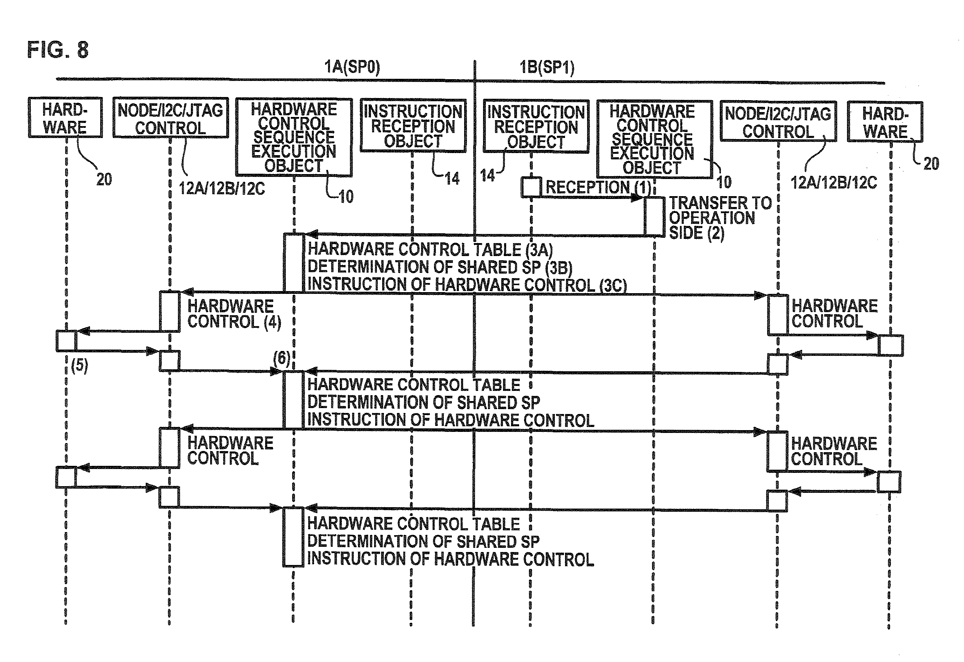

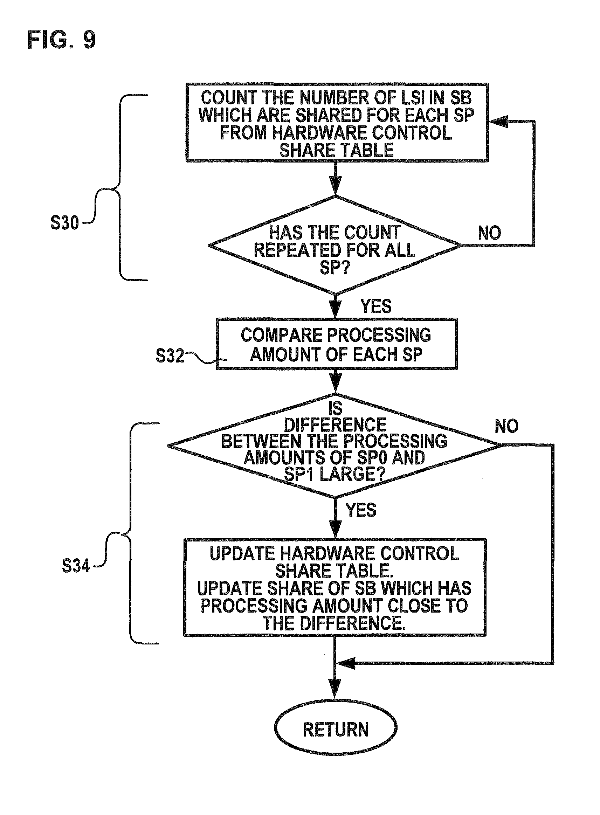

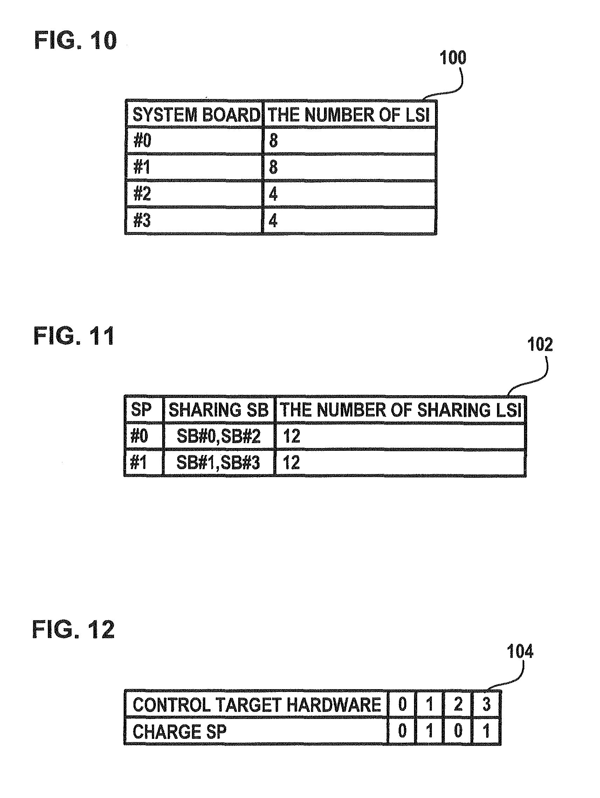

FIG. 7 is a process flow diagram of the hardware control by the program configuration in FIG. 5. FIG. 8 is a time chart diagram of the operation by the process flow diagram in FIG. 7. FIG. 9 is a decision process flow diagram of the service processor in the process flow in FIG. 7. FIG. 10 is a diagram of mounting LSI count table. FIG. 11 is a diagram of processing amount counting table. FIG. 12 is a diagram of hard control sharing table.

The hardware control process in FIG. 7 wiil be explained by referring to FIG.8.

(S10) A user of the system provides instructions by operating the terminal device 5A. The terminal device 5A outputs control instructions to the service processor via the LAN 50 using CLI (Command Line Interface) or GUI (Graphic User interface) in the terminal device 5A. In the embodiment, the instructions are output as an unit of system such as system power on or system reset or system power off. The instruction reception object 14 in the service processor 1B (standby state) receives the instructions issued by the system user (as indicated by (1) in FIG. 8). The instruction reception object 14 transmits received instructions to the execution object 10 in the service processor 1B. The execution object 10 in the service processor 1B checks state of the service processor 1B itself. When the state is standby, the execution object 10 in the service processor 1B transfers the received instructions to the execution object 10 in the service processor 1A which has the operation state (as indicated by (2) in FIG. 8).

(S12) The execution object 10 in the service processor 1A, which has the operation state, determines the hardware control sequence to execute from the received instructions. In the above embodiment, the hardware control sequence is determined to the system power on or the system reset.

(S14) As described in FIG.6, the steps of the executed hardware control are determined by the hardware control table. The execution object 10 in the service processor 1A determines the process to perform the hardware control according to the table indicated as FIG. 6 (as indicated by (3) in FIG. 8). For example, as described the power control sequence in FIG. 6, when there is the order to turn on the voltage when power-on, the sequence are divided to the order of turning on voltage. In addition, as described the reset control sequence in FIG.6, when there is the order of the initialization of the LSI elements, the sequence are divided to the order of the initialization.

(S16) The execution object 10 decides which service processor executes the hardware control to perform. As will be described in detail in FIG.9 and later, the execution object 10 determine the services processors 1A or 1B of charge according to the amount of hardware to control. That is, the execution object 10 creates a table indicating what services processor 1A or 1B control any hardware and sends instructions to the node control object 12A according to the table. The table is called to a hard control share table. The hard control share table dynamically changes and transfers the hardware control to another service processor which is not failed, when the service processor is failed and impossible to continue the hardware control (as indicated by (3B) in FIG. 8).

(S18) The execution object 10 transfers shared process contents to the node object 12A of the service processor 1A or 1B which determines the share. At this time, the execution object 10 stores necessary data for dual switching in the shared database files 16. The store data stored in the shared database files 16 includes a check point where the hardware control sequences has executed and number of the services processors 1A or 1B which is executing the hardware control (as indicated by (3C) in FIG. 8).

(S20) In each service processor 1A and 1B, which are shared the processing, the node control object 12A receives the instruction from the execution object 10. The node control object 12A analyzes the received instruction. The node control object 12A sends the instruction to the I2C control object 12B when the instruction is the I2C control instruction and sends the instruction to the JTAG control object 12C, when the instruction is the JTAG control instruction (as depicted by (4) in FIG. 8). In each service processor 1A and 1B, the I2C control object 12B and the JTAG control object 12C issues the commands to the hardware (LSI elements 20) in the system boards 2A and 2B through the signal line LA1 ∼ LB2, as above described by using FIG.3 ∼ FIG.6.

(S22) The hardware 20 in the system boards 2A and 2B sequentially execute the received command. Therefore, as described by using FIG. 3 ∼ FIG. 6, the hardware 20 execute the power control sequence and the reset sequence. Each hardware 20 return results of the execution to the execution object 10 of the service processor 1A through the same route as a response (as depicted by (5) in FIG. 8).

(S24) The execution object 10 of the service processor 1A updates necessary data for duplex switching in the shared database file 16 depending on reception of the response. When the synchronization of the shared database files 16 is necessary, the service processor 1A waits that the response comes back from the control program 12 (the node control object 12A, the JTAG control object 12C object, and the I2C control object 12B) of another service processor 1B (as depicted by (6) in FIG. 8).

(S26) The execution object 10 of the service processor 1A judges whether or not all of the instructed hardware execution sequence completed. When the execution object 10 determines that all of the hardware execution sequences have not completed, the execution object 10 returns to the step S14 and advances to the execution of next hard control sequence. Conversely, when the execution object 10 judges that all of the instructed hardware execution sequence completed, the execution object 10 finishes the hardware control. As well as, when the execution object 10 receives the response from the control object 10 of another service processor 1B, the execution object 10 of the service processor 1A judges whether or not all of the instructed hardware execution sequence completed. When the execution object 10 determines that all of the hardware execution sequences have not completed, the execution object 10 returns to the step S14 and advances to the execution of next hard control sequence. Conversely, when the execution object 10 judges that all of the instructed hardware execution sequence completed, the execution object 10 finishes the hardware control.

Next, the determination process (S16) of the service processor in FIG. 7 will be explained by using FIG. 9 and referring to FIG.10 ∼ FIG. 12. The system boards 2A and 2B are able to mount a plurality of the CPUs and a plurality of memories (DIMM). The number of CPU mounted the system boards 2A and 2B and the number of system boards is different depending on the configuration of each user. And the amount of processing, which perform the initialization and the setting process of each LSI element 20, increases in the system board having more CPUs or memories (DIMM). Further, on the structure of the hardware, it is not possible that the plurality of service processor control the same LSI element in the same system board at the same time. Here, the embodiment of the share in unit of the system board will be described.

(S30) The execution object 10 counts the processing amount of the hardware control in each of the service processors 1A and 1B. In the example, the execution object 10 obtains the number of LSI elements 20 mounted on each of the four system board #0 ∼ #3 from the configuration definition table, as indicted by FIG. 10. The system boards, which each of the service processors 1A and 1B charge, are predetermined in a hard control charge table 104 by a format in FIG. 12. The execution object 10 calculates the processing amount (the number of LSI elements) of each service processors 1A and 1B from obtained number of LSI elements 20. For example, as illustrated in FIG.11, when the service processor 1A charges the system Boards #0 and #2 and the service processor 1B charges the system board system boards #1 and #3, the execution object 10 creates a processing amount table which the number of LSI elements charged by each of the service processors 1A and 1B has been counted.

(S32) The execution object 10 compares the processing amounts of each of the service processors 1A and 1B in the processing amount table in FIG. 11. Here, the processing amount means the number of the LSI elements (as indicated by the number of shared LSI in FIG. 11).

(S34) The execution object 10 updates hardware the control sharing table 104, when the difference of the processing amount between the service processor 1A and service processor 1B is large by comparing the processing amount of each of the service processors 1A and 1B. For example, the execution object 10 updates the charge of the system board with the processing amount (the number of LSI elements in the embodiment) close to the difference of the processing amount between the service processor 1A and the service processor to another service processor from one service processor. And the execution object 10 does not updates the hardware control sharing table 104 and exits, when the difference of the processing amount between the service processor 1A and service processor 1B is small by comparing the processing amount of each of the service processors 1A and 1B. Here, it is determined whether the processing amount is small or large by a basis of the system board which mounts the smallest number of LSI elements.

For example, FIG. 10 through FIG. 12 illustrate that two service processors 1A and 1B targets the hard control of four system board #0 ∼ #3. As depicted as FIG. 10, the numbers of LSI elements installed in each of the system Board #0 ∼ #3 are "8", "8", "4", and "4". As illustrated by the processing table 102 in FIG. 11, when the service processor 1A charges the system boards #0, #2 and the service processor 1B charges the system boards #1, #3, the numbers of LSI elements, which each of the service processors 1A and 1B charges, are "12" and "12".

The hardware control sharing table 104 is a table indicating a correspondence of the system board (here, described as "control target hardware" in Figure) to the charging service processor (here, described "SP" in Figure). A column of the system board in the table indicates the system board number (#0 ∼ #3), and a column of the sharing service processor in the table indicates the service processor number (0=1A and 1=1B in Figure) which charges the hard control of the control target. First, the processing amount table 102 as depicted as FIG. 11 is created from the hardware control sharing table 104. When there is a dispersion of the sharing number of the LSI elements in the processing amount table 102, the processing amount table 102 is updated such as to make the sharing number of LSI elements equal. And according to a result of the processing amount table 102, the hardware control sharing table 104, which determines that the service processor 1A (#0) charges the system boards #0, #2 and the service processor 1B (#1) charges the system boards #1, #3, is obtained as illustrated as FIG.12.

As described above, because of determining the service processors 1A and 1B which charge the hardware control such as equal processing amount, it is possible to execute the hardware control at high speed, even though the service processors share the hardware control.

And, when the hardware controls are shared in above construction, it is effective to respond to an issue that one service processor fails. In this case, the hardware control targets (here, it is the system board), which were assigned to the failed service processor, are selected from the hardware control sharing table 104 and are assigned to the service processor which does not fail. So it is possible to continue the hardware control corresponding to the failure of the service processor by rewriting the hardware control sharing table 104 only.

When the failed service processor restores, it is effective to again assign the hardware control targets as depicted in FIG.9 and to determine the share of the processing in each of the service processor.

In this way, it is possible to execute the hardware control at high speed, because of increasing the number of hardware which can control at the same time by parallel controlling hardware of the system boards from the a plurality of system control devices in a redundant construction. And because of decomposing the hardware control sequence in the fine control targets/control contents and dividing the processing to the plurality of service processors according to the processing amount in control of the hardware control sequence in order, it is possible to control the hardware with a higher speed.

### (Second Embodiment of the hardware control)

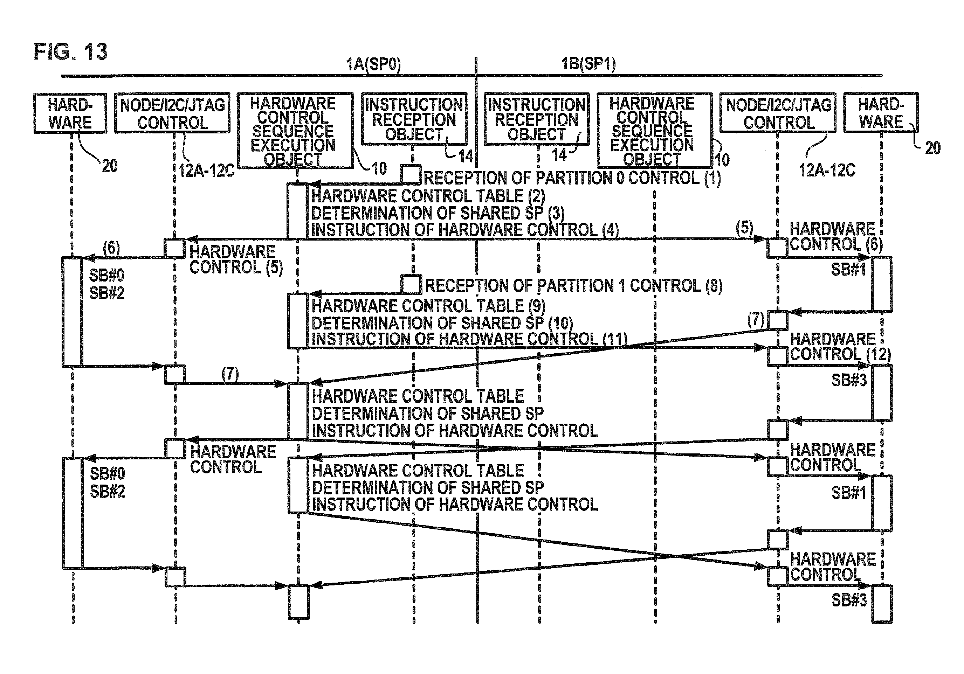

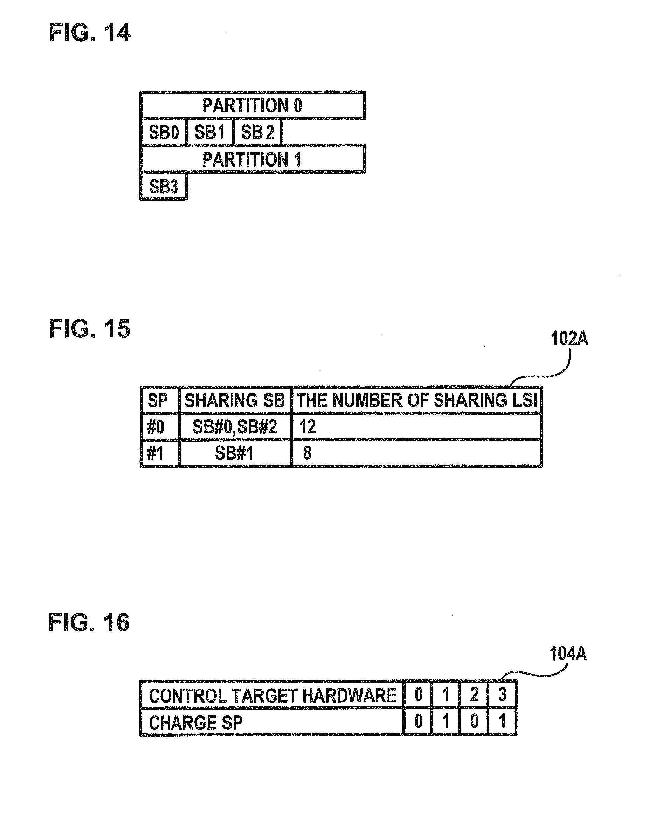

FIG. 13 illustrates a time chart of the hardware control by the program configuration depicted in FIG. 5 according to second embodiment. FIG. 14 is an explanation diagram of partitions in FIG. 13. FIG. 15 is a diagram of a processing amount counting table. FIG. 16 is a diagram of a hardware control sharing table.

The second embodiment is an example to apply the first embodiment to the partition configuration information processing system. A partition is defined a group of a plurality of the hardware in the information processing system and forms a section which does not interfere between the groups each other in the system. The partition will be explained by using FIG. 14. For example, when the information processing system has four system boards SB1 ∼ SB4, three system boards SB0, SB1 and SB2 are assigned to the partition 0 and the single system board SB3 is assigned to the partition 1. Without interfering the system boards SB0, SB1, SB2 in the partition 0 with the system board SB3 in the partition 1, the information processing are executed in independence. In the partition construction, the hardware control are executed by partition basis.

The second embodiment will be explained by using FIG. 13 and referring to FIG. 14 to FIG. 16. In the following description, the example of independently controlling the hardware in the partitions 0 and 1 will be explained. And, the second embodiment is also applied the configuration in FIG. 5 and FIG. 6 explained on the first embodiment.
(1) As similar to S10 in FIG. 7, a user of the system provides instructions by operating the terminal device 5A. The terminal device 5A outputs control instructions of the partition 0 to the service processor via the LAN 50 using CLI (Command Line Interface) or GUI (Graphic User interface) in the terminal device 5A. In the embodiment also, the instructions are output as an unit of system such as system power on or system reset or system power off. In the embodiment, the instruction reception object 14 in the service processor 1A (operation state) receives the instructions of the partition 0 issued by the system user (as indicated by (1) in FIG. 13). The instruction reception object 14 transmits received instructions to the execution object 10 in the service processor 1A.
(2) As similar to S12 and S14 in FIG.7, the execution object 10 in the service processor 1A, which has the operation state, determines the hardware control sequence to execute from the received instructions. In the above embodiment, the hardware control sequence is determined to the system power on or the system reset. The execution object 10 in the service processor 1A determines the process to perform the hardware control according to the table indicated as FIG. 6 (as indicated by (2) in FIG. 13). For example, as described the power control sequence in FIG. 6, when there is the order to turn on the voltage when power-on, the sequence are divided to the order of turning on voltage. In addition, as described the reset control sequence in FIG.6, when there is the order of the initialization of the LSI elements, the sequence are divided to the order of the initialization.
(3) As similar to S16 in FIG. 7, the execution object 10 decides which service processor executes the hardware control to perform. For example, as depicted as FIG. 10, the numbers of LSI elements installed in each of the system boards #0 ∼ #3 are "8", "8", "4", and "4". And as depicted as FIG. 14, the system boards #0, #1, #2 constructs the partition 0. As illustrated by the processing table 102A in FIG. 15, when the service processor 1A of the partition 0 charges the system boards #0, #2 and the service processor 1B charges the system boards #1, the numbers of LSI elements, which each of the service processors 1A and 1B charges, are "12" and "8". In this case, if the service processor, which charges the system board (here, SB #2) having smallest number of LSI elements (=4), is changed to, the processing amount of each of the service processors 1A and 1B is same.
   Therefore, without changing the service processor which charges, according to the processing amount table 102A as depicted in FIG. 15, the hardware control sharing table 104A, which determines that the service processor 1A (#0) charges the system boards #0, #2 and the service processor 1B (#1) charges the systems #1, is obtained as illustrated as FIG.16.
(4) As similar to S18 in FIG.7, the execution object 10 transfers shared process contents (that is, the system boards #0 and #2) to the node object 12A of the service processor 1A which determines the share of the process. And the execution object 10 transfers shared process contents (that is, the system board #1) to the node object 12A of the service processor 1B which determines the share of the process. At this time, the execution object 10 stores necessary data for dual switching in the shared database files 16. The store data stored in the shared database files 16 includes a check point where the hardware control sequences has executed and number of the services processors 1A and 1B which are executing the hardware control.
(5) As similar to S20 in FIG.7, in each service processor 1A and 1B, which are shared the processing, the node control object 12A receives the instruction from the execution object 10. The node control object 12A analyzes the received instruction. The node control object 12A sends the instruction to the I2C control object 12B when the instruction is the I2C control instruction and sends the instruction to the JTAG control object 12C, when the instruction is the JTAG control instruction. In the service processor 1A, the I2C control object 12B and the JTAG control object 12C issues the commands to the hardware (LSI elements 20) in the system boards 2A and 2B (SB #0 and SB #2) through the signal line LA1 ∼ LB2, as above described by using FIG.3 ∼ FIG.6. As same as, In the service processor 1B, the I2C control object 12B and the JTAG control object 12C issues the commands to the hardware (LSI elements 20) in the system board SB #1 through the signal line LA1 ∼ LB2, as above described by using FIG.3 ∼ FIG.6.
(6) As similar to S22 in FIG.7, the hardware 20 in the system boards 2A, 2B ....(#0, #1, #2) sequentially execute the received command. Therefore, as described by using FIG. 3 ∼ FIG. 6, the hardware 20 execute the power control sequence and the reset sequence. Each hardware 20 return results of the execution to the execution object 10 of the service processor 1A through the same route as a response (as depicted by (5) in FIG. 8).
(7) The execution object 10 of the service processor 1A updates necessary data for duplex switching in the shared database file 16 depending on reception of the response. When the synchronization of the shared database files 16 is necessary, the service processor 1A waits that the response comes back from the control program 12 (the node control object 12A, the JTAG control object 12C object, and the I2C control object 12B) of another service processor 1B. The execution object 10 of the service processor 1A judges whether or not all of the instructed hardware execution sequence of the partition 0 completed. When the execution object 10 determines that all of the hardware execution sequences have not completed, the execution object 10 advances to the execution of next hard control sequence. Conversely, when the execution object 10 judges that all of the instructed hardware execution sequence completed, the execution object 10 finishes the hardware control.
(8) And during the hardware in the system boards #0, #1, #2 of the partition 0 execute the hardware control, when the instruction reception object 14 of the service processor 1A which operates receives the control instructions for the partition 1 issued by the user of the system, the service processor 1A parallel executes each control. That is, the instruction reception object 14 transfers the received control instruction of the partition 1 to the execution object 10.
(9) As similar to S12 and S14 in FIG.7, the execution object 10 in the service processor 1A, which has the operation state, determines the hardware control sequence to execute from the received instructions. The execution object 10 in the service processor 1A determines the process to perform the hardware control according to the table indicated as FIG. 6
(10) As similar to S16 in FIG. 7, the execution object 10 decides which service processor executes the hardware control to perform. For example, as depicted as FIG. 10, the numbers of LSI elements installed in each of the system boards #0 ∼ #3 are "8", "8", "4", and "4". And as depicted the processing amount table 102A as FIG. 15, it is determined that the service processor 1A of the partition 0 charges the system boards #0, #2 and the service processor 1B charges the system boards #1. In the partition 0, the numbers of LSI elements, which each of the service processors 1A and 1B charges, are "12" and "8". In this case, when determining the service processor, which charges the system board SB #3 of the partition #1, because the number of LSI elements in the system board #3 of the partition 1 is "4", it is determined that the service processor 1B (#1), in which the processing amount is "8" at this time, charges the partition 1. Therefore, it is possible that the processing amount of each of the service processors 1A and 1B is same. That is, the hardware control sharing table 104A is updated that the service processor 1A (#0) charges the system boards #0, #2 and the service processor 1B charges the system boards #1, #3, as illustrated as FIG.16.
(11) As similar to S18 in FIG.7, the execution object 10 transfers shared process contents (that is, the system board #3) to the node object 12A of the service processor 1B which determines the share of the process. At this time, the execution object 10 stores necessary data for dual switching in the shared database files 16. The store data stored in the shared database files 16 includes a check point where the hardware control sequences has executed and number of the services processors 1A and 1B which are executing the hardware control.
(12) As similar to S20 in FIG.7, in the service processor 1B, which is shared the processing, the node control object 12A receives the instruction from the execution object 10. The node control object 12A analyzes the received instruction. The node control object 12A sends the instruction to the I2C control object 12B when the instruction is the I2C control instruction and sends the instruction to the JTAG control object 12C, when the instruction is the JTAG control instruction.

As similar to S22 in FIG.7, the hardware 20 in the system board #3 sequentially execute the received command. Therefore, as described by using FIG. 3 ∼ FIG. 6, the hardware 20 execute the power control sequence and the reset sequence. Each hardware 20 return results of the execution to the execution object 10 of the service processor 1A through the same route as a response.

In the partition construction, the service processors 1A and 1B, which charge the hardware control, are determined to make same processing amount, therefore it is possible to execute the hardware control at high speed even though the service processors shares the processing of the hardware control. And because of executing the hardware control in another partition in empty time of the hardware control in one partition, faster hardware control can be realized.

### (Third Embodiment of the hardware control)

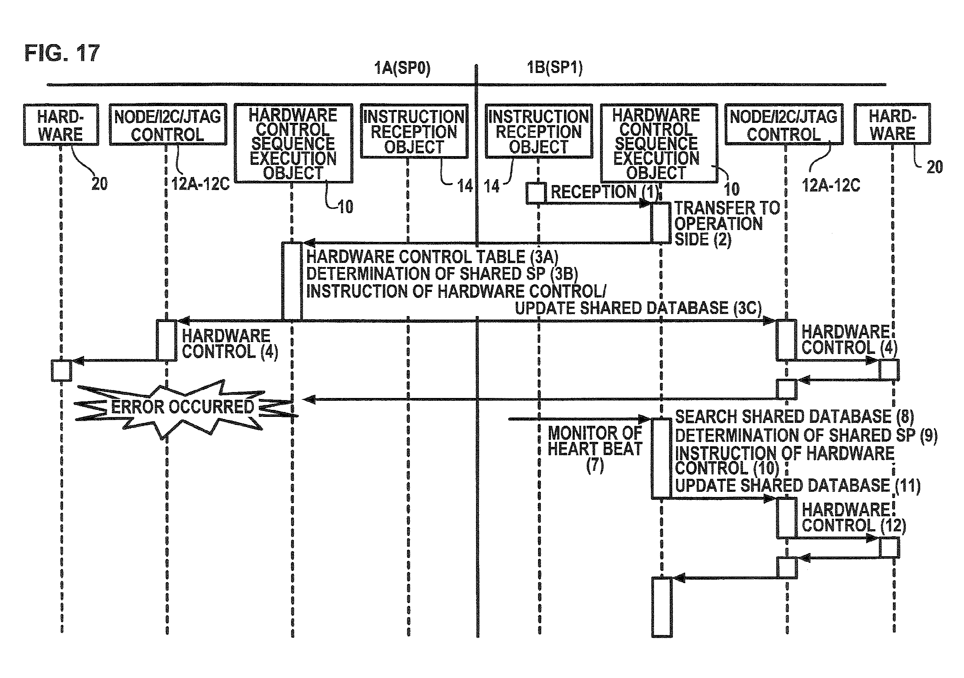

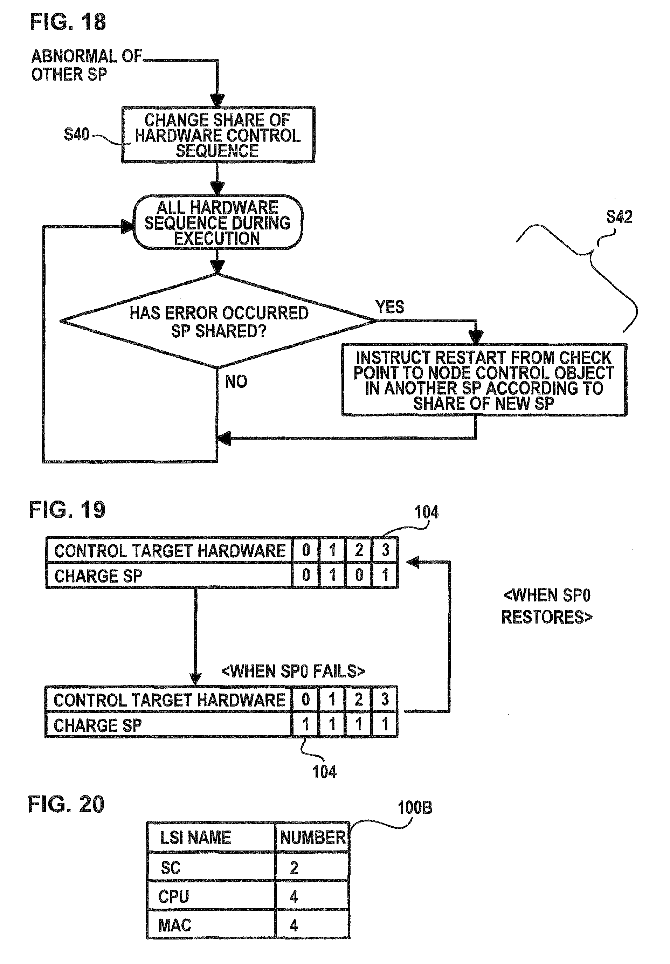

FIG. 17 is a time chart of the hardware control by the program configuration depicted in FIG. 5 according to third embodiment. FIG. 18 is a flow diagram of sharing of the process in the service processors. FIG. 19 is an explanation diagram of sharing of the process in FIG. 17 and FIG. 18.

The third embodiment illustrates processes when one service processor fails. Below, the third embodiment will be explained by using FIG. 17. In FIG.17, same process that was described in FIG. 7 indicate same symbols.
(1) As similar to S10 in FIG. 7, a user of the system outputs control instructions to the service processor via the LAN 50 using CLI (Command Line Interface) or GUI (Graphic User interface) in the terminal device 5A. The instruction reception object 14 in the service processor 1B (standby state) receives the instructions issued by the system user.
(2) The instruction reception object 14 transfers the received control instruction to the execution object 10 of the service processor 1B. The execution object 10 of the service processor 1B checks the status of the service processor 1B, and transfers the received instruction to the execution object 10 of the service processor 1A having the operation status when the service processor 1B is the standby status.
(3A) As similar to S12 in FIG.7, the execution object 10 in the service processor 1A, which has the operation state, determines the hardware control sequence to execute from the received instructions. In the above embodiment, the hardware control sequence is determined to the system power on or the system reset. As described in FIG.6, the steps of the executed hardware control are determined by the hardware control table. The execution object 10 in the service processor 1A determines the process to perform the hardware control according to the table indicated as FIG. 6.
(3B) As similar to S16 in FIG.7, the execution object 10 decides which service processor executes the hardware control to perform. As will be described in detail in FIG.9 and later, the execution object 10 determines the services processors 1A or 1B of charge according to the amount of hardware to control. That is, the execution object 10 creates a table indicating what services processor 1A or 1B control any hardware and sends instructions to the node control object 12A according to the table.
(3C) As similar to step S18 in FIG.7, the execution object 10 transfers shared process contents to the node object 12A of the service processor 1A or 1B which determines the share. At this time, the execution object 10 stores necessary data for dual switching in the shared database files 16. The store data stored in the shared database files 16 includes a check point where the hardware control sequences has executed and number of the services processors 1A or 1B which is executing the hardware control.
(4) As similar to S20 in FIG.7, in each service processor 1A and 1B, which are shared the processing, the node control object 12A receives the instruction from the execution object 10. The node control object 12A analyzes the received instruction. The node control object 12A sends the instruction to the I2C control object 12B when the instruction is the I2C control instruction and sends the instruction to the JTAG control object 12C, when the instruction is the JTAG control instruction. In each of the service processors 1A and 1B, the I2C control object 12B and the JTAG control object 12C issues the commands to the hardware (LSI elements 20) in the system boards 2A and 2B through the signal line LA1 ∼ LB2, as above described by using FIG.3 ∼ FIG.6.
(5) As similar to S22 in FIG.7, the hardware 20 in the system boards 2A and 2B sequentially execute the received command. Therefore, as described by using FIG. 3 ∼ FIG. 6, the hardware 20 execute the power control sequence or the reset sequence. Each hardware 20 return results of the execution to the execution object 10 of the service processor 1A through the same route as a response.
(7) The redundant service processors 1A and 1B monitor heart beat each other. In the heart beat monitoring, Each of the service processors communicate with each other at a predetermined time interval and one service processor determines there is no heart beat response when the one service processor does not detect the communication of another processor at the predetermined time. And the determined result is notified to the hardware control sequence execution object 10 as an event.
(8) The execution object 10 re-distributes the processing, of which the failed service processor 1A has charged, according to the notification of no-response of the heart beat. That is, the execution object 10 searches the checkpoint of the hardware control which are assigned to the failed service processor 1A in the shared database file 16. The shared database file 16 synchronizes the written contents with another database file and stores number of service processor which executed the hardware control sequence and the check point where the hardware control sequence has executed.
(9) The execution object 10 update the hardware control sharing table 104, as detailed in FIG. 18 and below.
(10) The execution object 10 instructs a re-start of the control from the recorded check point to the node control object 12A in accordance with new hardware control sharing table 104 which was updated. That is, according to the new hardware control sharing table 104 which was updated, the execution object 10 issues the instructions of the hardware control of the system board # 0, # 1, #2, #3.
(11) The execution object 10 stores necessary data (a check point where the hardware control sequences has executed and number of the services processors 1A or 1B which is executing the hardware control) for dual switching in the shared database files 16.
(12) The node control object 12A sends the instruction to the I2C control object 12B when the instruction is the I2C control instruction and sends the instruction to the JTAG control object 12C, when the instruction is the JTAG control instruction. In the service processor 1B, the I2C control object 12B and the JTAG control object 12C issues the commands to the hardware (LSI elements 20) in the system boards 2A and 2B (SB#0, SB#2) through the signal line LA1 ∼ LB2, as above described by using FIG.3 ∼ FIG.6. Thereafter, the control of the step S20 and its below are executed.

The charge changing process will be described by using FIG. 18 and referring to FIG.19.
(S40) The execution object 10 in one service processor selects the hardware control targets (here, the system boards #0, #2) which was assigned to the filed service processor in the hardware control sharing table 104 and assigns the hardware control targets to the service processor which does not fail when receiving the notification that the other service processor is abnormal. As illustrated in FIG.19, the execution object 10 rewrites the charged SP to "1" in the hardware control sharing table 104 of the shared database file 16 so that the service processor 1B charge the system boards #0 ∼ #3 according to the failure of the service processor 1A (# 0).
(S42) The execution object 10 reads all hardware control sequence of executing in the shared database file 16 and determines whether or not read the hardware control sequence is charged by the failed service processor 1A. When determining the hardware control sequence which is charged by the failed service processor 1A, the execution object 10 of the service processor 1B instructs a restart from the check point of the hardware control sequence which was charged by the service processor 1A to the node control object 12A according to new hardware sharing table 104. While, when determining the hardware control sequences which is not charged by the failed service processor 1A, the execution object 10 of the service processor 1B instructs a continuous of the processing from the check point of the hardware control sequence which is charged by the service processor 1B to the node control object 12A.

In a normal status except the abnormal, the execution objects 10 in each of the service processors 1A and 1B stores service processor number which is assigned the execution for each hardware control sequence in the shared database file 16 when instructing to the node control object 12A. And, whenever the node control object 12A is proceeding with the hardware control sequence, the node control object 12A updates the checkpoint. Updated information is written to the shared database file 16 to synchronize between the service processors 1A and 1B.

In this way, when one service processor failed, the hardware control target (here, the system board), which was assigned to the filed service processor, is selected in the hardware control sharing table 104 and the hardware control target is assigned to the service processor which does not fail. Therefore, it is possible to continue the hardware control correspond to the failure of the service processor by only rewriting the hardware control sharing table 104.

Next, operations will be described as below when the failed service processor 1A is replaced and the system returns to a normal.
(A) The service processor 1A is replaced and started. The execution object 10 in the service processor 1A, which is starting, starts the synchronization with the execution object 10 of the service processor 1B which already has started. The execution object 10 in the service processor 1A, which started later on, starts with a standby status.
(B) The execution object 10 in the service processor 1B with an operation status updates the hardware control sharing table 104 according to the process described in FIG. 9. As illustrated in FIG. 19, the execution object 10 rewrites the columns of the charge SP in the hardware control sharing table 104, which was rewritten into all "1" so that the service processor 1B charges the system boards #0 ∼ #3, to the information that the service processor 1A (#0) charges the system boards #0 and #2 and the service processor 1B charges the system boards #1 and #3.
(C) After the node control object 12A in the service processor 1B completed the executing hardware control, the node control object 12A instructs next hardware control to the service processor 1A which is replaced.

### (Fourth Embodiment of the hardware control)

Above embodiments were described examples that redundant system control devices (service processors) 1A and 1B share the hardware control for unit of the system board. Fourth embodiment indicates an example of redundant system control devices (service processors) 1A and 1B share the hardware control in the unit of the LSI elements in the system board.

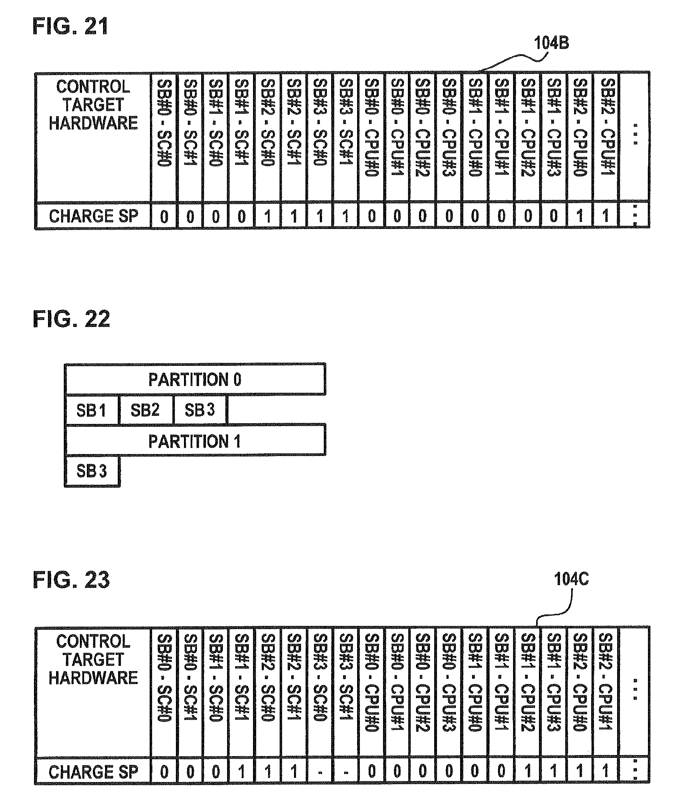

FIG. 20 is a diagram of a LSI number count table according to fourth embodiment. FIG. 21 is a diagram of a hardware control sharing table according to the fourth embodiment. FIG. 20 indicates a count table which was counted the LSI elements in the each of the system boards 2A and 2B in the construction of FIG. 1 and FIG. 2. And FIG. 20 illustrates an example of the system that each system board has two system controllers 24 (described as SC in the Figure), four CPU 22A ∼ 22D and four memory access controllers 26 (described as MAC in the Figure) as the LSI elements.

And FIG. 21 illustrates the hardware control sharing table indicating a sharing example of the hardware control of the service processors 1A and 1B in unit of the LSI elements in the four system boards #0 to #3. The decision process of the charge service processor compares the processing amount of each service processor and determines the charge service processor which charges each of the control target hardware as described in FIG. 9. As depicted as FIG.21, the service processor 1A (described by charge SP = 0 in FIG. 21) charges the system controller (described as SC in FIG. 21) #0 and #1 in the system boards (described as SB in FIG.21) #0 and #1 and the service processor 1B (described by SP = 1 in FIG.21) charges the system controller (SC) #0 and #1 in the system boards (SB) # 2 and # 3.

And the service processor 1A charges the CPU 22A ∼22D (described by #0, #1, #2, #3 in FIG.21) in the system boards (SB) #0 and #1. The service processor 1B charges the CPU 22A ∼ 22D (# 0 and # 1, # 2, # 3 in FIG.21) in the system board (SB) #2 and #3.

In this way, in the fourth embodiment, the sharing of hardware control is performed in LSI element units. It is especially effective to synchronization control the hardware control using the shared database file 16 because the hardware control are shared in LSI element unit.

Next, it will be explained as an example that the share of the hardware control in the LSI element unit is applied to the information processing system of the partition configuration described in the second embodiment. FIG. 22 is a diagram illustrating the partition configuration example according to the fourth embodiment. FIG. 23 is a diagram of the hardware control sharing table 104C of the partition 0 in FIG.22.

As indicated as FIG. 22, for example, when the information processing system has four system boards SB1 ∼ SB4, three system boards SB0 SB1 and SB2 are assigned to the partition 0, and a single system board SB3 is assigned to the partition 1. Without interfering with the system boards SB0, SB1, SB2 in the partition 0 and the system board SB3 in the partition 1, the information processing are performed in independence. In the partition construction, the hardware control are executed in the LSI unit and the partition unit.

The decision process of the charge service processor compares the processing amount of each service processor, determines the charge service processor which charges each of the control target hardware and creates the hardware control sharing table in FIG. 23, as described in FIG. 9 and FIG. 13 ∼ FIG.16. As depicted as FIG.23, the service processor 1A (described by charge SP = 0 in FIG. 23) charges the system controllers (described as SC in FIG. 23) #0 and #1 in the system board (described as SB in FIG.23) #0 and the system controller (SC) #0 in the system board (SB) # 1 in the partition 0. And the service processor 1B (described by SP = 1 in FIG.23) charges the system controller (SC) #1 in the system board (SB) #1 and the system controllers (SC) #0 and #1 in the system board #2.

And the service processor 1A (charge SP=0) charges the CPU 22A ∼22D (described by #0, #1, #2, #3 in FIG.23) in the system board (SB) #0 and the CPU 22A and 22B (#0, #1) in the system board (SB) #1. The service processor 1B (charge SP=1) charges the CPU 22C and 22D (#2, #3) in the system board (SB) #1 and the CPU 22A ∼ 22D (# 0 and # 1, # 2, # 3 in FIG.23) in the system board (SB) #2.

In this way, in the partition construction, the sharing of hardware control is executed in LSI element units. It is especially effective to synchronization control the hardware control using the shared database file 16 because the hardware control are shared in LSI element unit.

### (Other Embodiments)

In above embodiments, the hardware control sequence was described as the power on sequence and reset sequence, but can be applied the other hardware control sequence such as power off sequence, etc. Also, the hardware control from the system control device is described in I2C and JTAG control, but can employ the other control configuration. Further, when the salvation of one service processor failed is not considered, it is possible to omit the synchronization feature of the shared database file.

## Claims

1. An information processing system comprising:
a plurality of processing devices (2A, 2B), each having hardware (22A ∼22D, 24, 26, 28) that executes information processing;
a plurality of system control devices (1A, 1B) that control the hardware in the plurality of processing devices (2A, 2B) according to a hardware control instruction,
**characterized in that** one of the plurality of system control devices (1A, 1B) is arranged to determine shared processing amount of hardware control that each of the plurality of system control devices (1A, 1B) charges according to processing amount of the hardware control of the plurality of processing devices (2A, 2B), and
each of the plurality of system control devices (1A, 1B) is arranged to execute the hardware control of the shared processing amount for the plurality of the processing devices (2A, 2B).

2. The information processing system according to claim 1, wherein one of the plurality of system control devices (1A, 1B) is arranged to determine the shared processing amount of the hardware control in unit of the processing device (2A, 2B) according to the processing amount.

3. The information processing system according to claim 1, wherein one of the plurality of system control devices (1A, 1B) is arranged to determine the shared processing amount of the hardware control in unit of the hardware according to the processing amount.

4. The information processing system according to claim 1, wherein one of the plurality of system control devices (1A, 1B) is arranged to calculate the processing amount according to the number of the hardware in the plurality of the processing devices (2A, 2B).

5. The information processing system according to claim 1, wherein one of the plurality of system control devices (1A, 1B) is arranged to determine the shared processing amount so as to equalize processing amount that each of the plurality of system control devices (1A, 1B) charges.

6. The information processing system according to claim 1, wherein the plurality of system control devices (1A, 1B) is arranged to convert the hardware control sequence that is instructed by the hardware control instruction into a plurality of hardware control processing and sequentially execute the plurality of hardware control processing.

7. The information processing system according to claim 1, wherein each of the plurality of system control devices (1A, 1B) includes a shared file device (16) that stores progress status of the hardware control,
and wherein when one of the plurality of system control devices (1A) detects a faulty of another of the plurality of system control devices (1B), one of the plurality of system control devices (1A) refers the progress status in the shared file device (16) and continues the hardware control that another of the plurality of system control devices (1B) charges.

8. The information processing system according to claim 1, wherein the hardware (22A ∼22D, 24, 26, 28) comprises a LSI (Large Scaled Integrated) element.

9. The information processing system according to claim 1, wherein the plurality of processing units (2A, 2B) are divided into a plurality of partitions, and
one of the plurality of system control devices (1A, 1B) is arranged to determine the shared processing amount that each of the plurality of system control devices (1A, 1B) charges in unit of the partition.

10. The information processing system according to claim 1, wherein each of the plurality of processing devices (2A, 2B) has a power control circuit (29, 36, 35,39) that supplies power to the hardware, and
the hardware control sequence comprises a power control sequence of the power control circuit (29, 36, 35,39).

11. The information processing system according to claim 8, wherein each of the plurality of processing devices (2A, 2B) is arranged to execute an initialization control sequence of the LSI element in the plurality of processing devices (1A, 1B).

12. A method of controlling of hardware in an information processing system, the information processing system comprising a plurality of processing devices (1A, 1B), each having hardware (22A ∼ 22D, 24, 26, 28) that executes information processing and a plurality of system control devices (2A, 2B), the method comprising:
calculating processing amount for controlling the hardware in the plurality of processing devices (2A, 2B) by one of the plurality system control devices (1A, 1B) according to a hardware control instruction;
determining a shared processing amount that each of the plurality of system control devices (1A, 1B) charges from calculated the processing amount; and
executing a control of the hardware of the shared processing amount in the plurality of the processing devices (2A, 2B) by each of the plurality of system control devices (1A, 1B).

13. The method according to claim 12, wherein the determining comprising determining the shared processing amount in unit of the processing device (2A, 2B) from calculated the processing amount by one of the plurality of system control devices (1A, 1B).

14. The method according to claim 12, wherein the determining comprising determining the shared processing amount in unit of the hardware in the plurality of processing devices (2A, 2B) from calculated the processing amount by one of the plurality of system control devices (1A, 1B).

15. The method according to claim 12, the calculating comprising calculating the processing amount according to the number of the hardware in the plurality of the processing devices.

16. The method according to claim 12, the method further comprising:
storing progress status of the control of the hardware in a shared file devices by a plurality of system control devices;
referring the progress status in the shared file device when one of the plurality of system control devices detects a faulty of another of the plurality of system control devices; and
continuing the control of the hardware that another of the plurality of system control devices charges according to referred progress status by one of the system control devices.

17. The method according to claim 12, wherein the determining comprising determining the shared processing amount of each of the plurality of system control devices in unit of a partition that the plurality of processing units are divided, and
the executing comprises executing the control of the hardware of the shared processing amount in the plurality of the processing devices in the partition by each of the plurality of system control devices.
